# EUROPÄISCHE PATENTSCHRIFT

(11) **EP 1 099 583 B1**
(45) Veröffentlichungstag und Bekanntmachung des Hinweises auf die Patenterteilung: **19.05.2004**
(21) Anmeldenummer: 00124483.9
(22) Anmeldetag: 09.11.2000
(51) Int. Cl.: B60J 7/057, H01H 25/00

(54) **Betätigungsmechanik für einen Mehrfunktionschalter für ein Kraftfahrzeughebe- Schiebedach**
Actuating mechanism for a multifunction switch for tilting-sliding roof of motor vehicles
Mécanisme d'actionnement pour interrupteur multifunctionel pour toit basculant-coulissant pour véhicule automobile

(30) Priorität: 12.11.1999 DE 19954488
(43) Veröffentlichungstag der Anmeldung: 16.05.2001
(73) Patentinhaber: Hella KG Hueck & Co., 59552 Lippstadt (DE)
(72) Erfinder: Dennhardt, Michael, 59557 Lippstadt (DE)

(56) Entgegenhaltungen:
- EP-A- 1 037 229
- DE-C- 19 834 823
- US-A- 5 920 042

## Beschreibung

Die Erfindung betrifft eine Betätigungsmechanik für einen Mehrfunktionenschalter mit einer Schiebe- und einer Hebebetätigung zur Steuerung eines Schiebe-Hebedaches in einem Kraftfahrzeug.

Dabei soll sich dieser Schalter analog zu der gewünschten Bewegung des Schiebehebedaches bewegen lassen, d.h. Schalter-nach-vorn-schieben bedeutet: Schiebedach schließen usw.

Als Schiebe-Hebedachschalter werden im Regelfall Schalter verwendet, die aus einer Kombination eines Schiebeschalters und eines Druck- oder Hubschalters bestehen, die in einem gemeinsamen Gehäuse angeordnet sind. Dies bedeutet, daß die beiden Schaltfunktionen mechanisch im wesentlichen unabhängig voneinander realisiert sind. Nachteilig an solchen Schaltern ist, daß deren Aufbau relativ aufwendig und die Führung des Schalters im Gehäuse relativ stark reibungsbehaftet ist.
Es ist die Aufgabe der Erfindung, eine Betätigungsmechanik für einen Mehrfunktionenschalter zu schaffen, der bei einem möglichst einfachen Aufbau eine möglichst reibungsarme Betätigung und dabei gleichzeitig eine gute Haptik aufweist.

Diese Aufgabe wird erfindungsgemäß durch die Merkmalskombination des Anspruches 1 gelöst.

Ein mit der erfindungsgemäßen Betätigungsmechanik ausgestatteter Mehrfunktionenschalter kann besonders einfach aufgebaut sein. Die nach dem Parallelogrammprinzip funktionierende Betätigungsmechanik besteht im wesentlichen aus nur vier Teilen, nämlich einem Schiebedachhebel, einem Hebedachhebel, einem Bedienelement, sowie einer Schubstange. Der Schiebedachhebel und der Hebedachhebel sind auf einer gemeinsamen Drehachse drehbar gelagert. Hierdurch bildet der Aufbau ein achsenminimales System, bei dem die Drehachsen mit den vier Parallelogrammeckpunkten zusammenfallen. Hieraus ergibt sich der Vorteil einer möglichst geringen Anzahl von Umlenkpunkten. In den Lagerstellen herrscht keine translatorische Reibung, sondern ausschließlich Drehreibung, d.h. es ergeben sich erstens nur sehr geringe Reibungsverluste im Gesamtsystem und zweitens gibt es keinen plötzlichen harten Übergang von der Haft- zur Gleitreibung ("StickSlip-Effekt"), woraus vorteilhafterweise ein nur geringes "Verschleifen" der Haptik sowie besonders geringe erforderliche Rückstellkräfte resultieren.

Ein besonderer Vorteil der erfindungsgemäßen Betätigungsmechanik besteht darin, daß die gegenseitige Beeinflussung ("Übersprechen") der beiden Betätigungsfunktionen (Schiebedach- und Hebedachfunktion) äußerst gering ist. Weil somit keine Überlagerung der Betätigungskräfte auftritt, ergibt sich für die Schaltfunktionen ein besonders gut ausgebildetes Rastgefühl ("Haptik").

Da bei Betätigung der sensierenden Taster praktisch kein Bewegungsanteil quer zur Betätigungsrichtung auftritt, können auch Silikonschaltmattensysteme zum Einsatz kommen. Diese sind besonders kostengünstig und geräuscharm. Silikonschaltmatten bieten zudem aufgrund ihres relativ weichen Kraft-/Weganstieges eine gute Möglichkeit, als Vorspannungselement wirkend, die Hebelmechanik in Neutrallage zu halten.

Die gesamte Aufhängung der Schaltermechanik innerhalb eines Gehäuses erfolgt über eine einzige gemeinsame Achse, die durch die gemeinsame Lagerstelle von Schiebedachhebel und Hebedachhebel verläuft. Hierdurch sind großzügige Toleranzen hinsichtlich der Gehäuseausführung möglich.

Im folgenden soll der Aufbau des erfindungsgemäßen Betätigungsmechanik eines Mehrfunktionenschalters anhand der Zeichnung dargestellt und näher erläutert werden.

Die beiden Figuren zeigen eine Prinzipskizze des erfindungsgemäßen Mehrfunktionenschalters, dargestellt in zwei Betätigungsstellungen.

Die Betätigungsmechanik des Mehrfunktionenschalters besteht aus einem Schiebedachhebel (1), einem Hebedachhebel (2), einem Bedienelement (3), sowie aus einer Schubstange (4).

Die Betätigungsmechanik ist nach dem Parallelogrammprinzip aufgebaut. In der Realisierung bedeutet dies, daß mit dem Bedienelement (3) an einem Lagerpunkt c ein Endabschnitt der Schubstange (4) verbunden ist und an einem weiteren Lagerpunkt d ein Abschnitt (6) des T-förmigen Schiebedachhebels (1). Der andere Endabschnitt der Schubstange (4) ist im Lagerpunkt b an den Hebedachhebel (2) angelenkt. Des weiteren besitzen der Schiebedachhebel (1) und der Hebedachhebel (2) einen gemeinsamen Lagerpunkt a, durch den senkrecht deren gemeinsame Drehachse (A) verläuft.

Der Abstand der beiden Lagerstellen (b, c) der Schubstange (4) und der Abstand zwischen den beiden Lagerstellen (a, d) des Schiebedachhebels (1) sind gleich groß, damit sich bei der Schiebedachbetätigung das Bedienelement (3) parallel zum Hebedachhebel (2) verschiebt.

Bei kleinen Verschiebewegen des Bedienelementes (3) und einer im Verhältnis hierzu großen Länge der Schubstange (4) und des Abschnitts (6) des Schiebedachhebels (1) erhält man eine Quasischiebebewegung, obwohl vorteilhafterweise nur Drehbewegungen gelagert werden müssen.

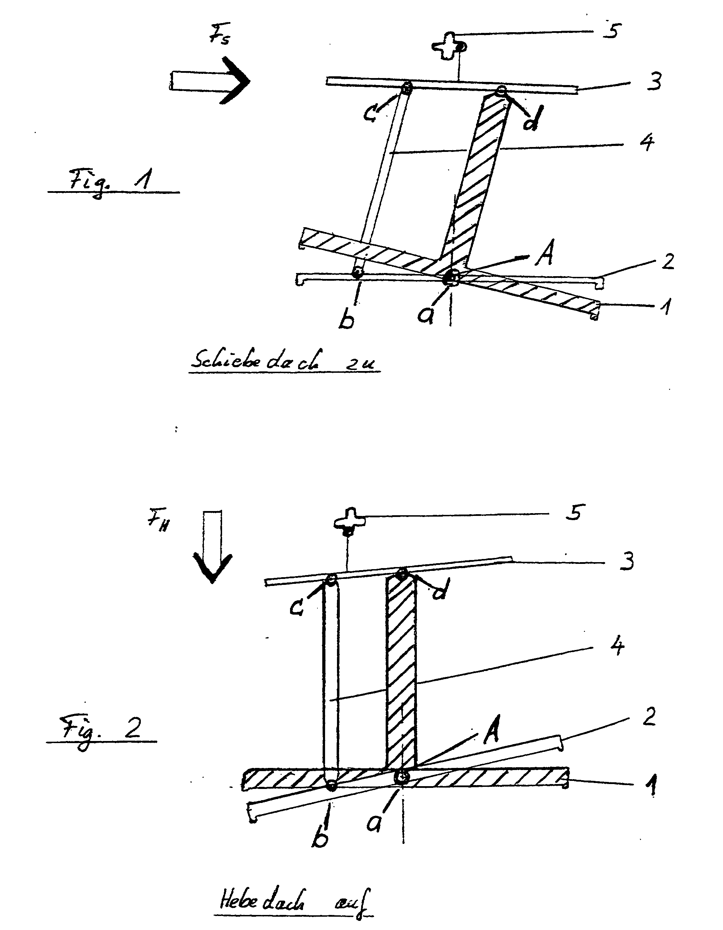

Die Figur 1 stellt eine Schaltstellung zur Betätigung des Schiebedaches dar. Hierbei drückt der Bediener mit der Kraft *F*_{*s*} auf das Bedienelement (3). Daraus resultiert eine Querkraft auf die Lagerstelle d und demzufolge ein Moment auf den Schiebedachhebel (1) um die Achse A, welches über den Hebelarm des Schiebedachhebels (1) auf einen in der Figur nicht dargestellten Hubtaster wirkt.

Durch die Parallelogrammführung erfährt das Bedienelement nur eine translatorische Lageverschiebung in die Betätigungsrichtung.

Zur Betätigung des Hebedaches, dargestellt in der Figur 2, drückt der Bediener mit der Kraft *F*_{*H*} auf das Bedienelement (3). Über die Schubstange (4) wird der Hebedachhebel (2) mit einem Moment um die Achse A beaufschlagt. Das Moment betätigt über die Länge des Hebedachhebels (2) einen unterhalb des Hebedachhebel angeordneten, in der Figur nicht gezeigten Hubtaster.

Um das gleichzeitige Betätigen des Schiebe- und Hebedaches zu unterbinden, wird die Schubstange (4) mit einem Querstift in einer Kreuzkulisse (5) geführt.

### Bezugszeichen

- 1: Schiebedachhebel
- 2: Hebedachhebel
- 3: Bedienelement
- 4: Schubstange
- 5: Kreuzkulisse
- 6: Abschnitt (des Schiebedachhebels 1)

- a, b, c, d: Lagerstellen
- A: Drehachse
- *F*_{*S*}*, F*_{*H*}: Betätigungskräfte

## Patentansprüche

1. Betätigungsmechanik für einen Mehrfunktionenschalter mit einer Schiebe- und einer Hebebetätigung zur Steuerung eines Schiebe-Hebedaches in einem Kraftfahrzeug,
mit einem Schiebedachhebel (1) zur Auslösung der Schaltfunktionen zur Steuerung der Schiebedachfunktion,
mit einem Hebedachhebel (2) zur Auslösung der Schaltfunktionen zur Steuerung der Hebedachfunktion,
mit einem Bedienelement (3), welches mit einem Abschnitt (6) des Schiebedachhebels (1) sowie, über eine Schubstange (4) mit dem Hebedachhebel (2) in einer Parallelogrammanordnung verbunden ist,
wobei der Schiebedachhebel (1) und der Hebedachhebel (2) auf einer gemeinsamen Drehachse (A) drehbar gelagert sind,
und wobei die gemeinsame Drehachse (A) senkrecht durch einen Eckpunkt der Parallelogrammanordnung verläuft.

2. Betätigungsmechanik nach Anspruch 1, **dadurch gekennzeichnet, daß** die Schubstange (4) in einer Kreuzkulisse (5) geführt ist.

3. Betätigungsmechanik nach Anspruch 1, **dadurch gekennzeichnet, daß** zur Auslösung der Schaltfunktionen der Schiebedachhebel (1) und der Hebedachhebel (2) auf Hubtaster einwirken.

4. Betätigungsmechanik nach Anspruch 3, **dadurch gekennzeichnet, daß** die Hubtaster mittels einer Silikonschaltmatte ausgebildet sind.

## Claims

1. Actuating mechanism for a multi-function switch having a sliding control and a tilting control for operating a tilt-and-slide roof in a motor vehicle,
with a sliding roof lever (1) for initiating the switching functions for controlling the sliding roof function,
with a tilting roof lever (2) for initiating the switching functions for controlling the tilting roof function,
with a control (3) which is linked to one section (6) of the sliding roof lever (1) and via a compression strut (4) to the tilting roof lever (2) in a parallelogram arrangement,
the sliding roof lever (1) and the tilting roof lever (2) being mounted for rotation on a common axis of rotation (A),
and the common axis of rotation (A) running perpendicularly through one corner point of the parallelogram arrangement.

2. Actuating mechanism according to claim 1, **characterised in that** the compression strut (4) is guided in a cross-shaped slotted link (5).

3. Actuating mechanism according to claim 1, **characterised in that** the sliding roof lever (1) and the tilting roof lever (2) operate on momentary-contact lifting controls to initiate the switching functions.

4. Actuating mechanism according to claim 3, **characterised in that** the momentary-contact lifting controls are configured by means of a silicone switching mat.

## Revendications

1. Mécanisme d'actionnement pour un commutateur multifonctions avec un actionnement de coulissement et de soulèvement pour commander un toit coulissant et basculant dans un véhicule automobile,
comprenant un levier de toit coulissant (1) destiné à déclencher les fonctions de commutation pour commander la fonction de toit coulissant,
comprenant un levier de toit basculant (2) destiné à déclencher les fonctions de commutation pour commander la fonction de toit basculant,
comprenant un élément de manoeuvre (3) qui est relié à un tronçon (6) du levier de toit coulissant (1), ainsi que, par l'intermédiaire d'une tige de poussée (4), au levier de toit basculant (2), selon un agencement en parallélogramme,
le levier de toit coulissant (1) et le levier de toit basculant (2) étant montés rotatifs sur un axe de rotation (A) commun,
et l'axe de rotation (A) commun s'étendant perpendiculairement à travers un sommet de l'agencement en parallélogramme.

2. Mécanisme d'actionnement selon la revendication 1, **caractérisé en ce que** la tige de poussée (4) est guidée dans une coulisse en croix (5).

3. Mécanisme d'actionnement selon la revendication 1, **caractérisé en ce que** pour le déclenchement des fonctions de commutation, le levier de toit coulissant (1) et le levier de toit basculant (2) agissent sur des boutons-poussoirs.

4. Mécanisme d'actionnement selon la revendication 3, **caractérisé en ce que** les boutons-poussoirs sont réalisés par une nappe de commutation en silicone.
